# EUROPEAN PATENT APPLICATION

(11) **EP 0 781 045 A2**
(43) Date of publication of application: **25.06.1997**
(21) Application number: 96120337.9
(22) Date of filing: 18.12.1996
(51) Int. Cl.: H04N 5/65

(54) **Adjustable protective screen for monitors of different dimensions**

(30) Priority: 22.12.1995 IT TO950266 U
(71) Applicant: Olivetti Lexikon S.p.A., 10015 Ivrea (TO) (IT)
(72) Inventor: Solero, Giorgio, 10155 Torino (IT)
(74) Representative: Casuccio, Carlo

(57) **Abstract**

A protective screen (10) for a monitor (11) comprising a filter (13) and two jaws (22, 23) for attaching the screen to the casing (16) of the monitor (11). The two jaws are in sliding engagement with a frame (14) of the filter (13) and are associated with elastic means (27, 28) to close the jaws together by causing them to slide on the frame (14). When the screen (10) is assembled on the monitor, the jaws (22, 23) are first opened and then closed by the elastic means (27, 28) on the side panels (18, 19) of the casing (16). Accordingly the jaws (22, 23) are suitable for adaptation to casings of different widths for stably attaching the protective screen (10) to the monitor (11).

## Description

### BACKGROUD OF THE INVENTION

The object of this invention is an adjustable protective screen for monitors of different dimensions, comprising a support frame inside which a filter is fitted, and attaching means for attaching the protective screen to the monitor casing so that the filter is placed in front of the monitor for provide protection.

Protective screens are being used increasingly on monitors both to protect the user from radiation emitted by the monitor and to keep dust from depositing on the display screen of the monitor.

Italian utility model No. 214515 describes a protective screen for monitors comprising adjustable attaching means for attaching the screen to the monitor and adjusting it in relation to the latter. This screen provides good protection against radiation but leaves lateral openings between the screen and the monitor through which dust could pass and thus deposit on the display screen of the monitor. Light from the surrounding atmosphere could also pass through these openings and cause unwelcome reflections on the display screen and disturb observation of the data displayed thereon.

Also known are protective screens that close the lateral openings between screen and monitor, which are provided with seals of flexible rubber or of a spongy material arranged at the sides of the filter sheets. These seals are of similar shape to the edges of the casing surrounding the display screen. Being resilient, the seals are suitable for pressure-fitting on the edges so as to adhere to the latter and attach the screen to the casing while, at the same time, closing the openings at the sides of the display screen.

However, in order to enable the frame to adhere effectively to the edges and produce good attachment of the screen, each of these frames is suitable for engagement only with edges which differ only slightly in shape and size.

The capacity of these screens to adapt to variously shaped monitor casings is therefore limited, particularly when the casings have widely different shapes, display screen side edges, widths and/or general dimensions.

### SUMMARY OF THE INVENTION

In view of the foregoing, the technical problem that this utility model proposes to resolve is that of producing a protective screen suitable to be adapted to monitor casings of different shapes and sizes and thus be attached stably on the latter, and also to guarantee good lateral sealing of the space between screen and monitor. This problem is solved by the protective screen of this utility model, according to the embodiment described in the first claim.

These and other characteristics of the utility model will become apparent in the course of the following description, provided as a non-exhaustive example, taken in conjunction with the accompanying drawings.

### BRIEF DESCRIPTION OF THE DRAWINGS

Fig. 1 is an exploded, perspective view of a protective screen according to the present utility model before being fitted on a corresponding monitor; and
Fig. 2 is a perspective view of the protective screen of Fig. 1, once fitted on the corresponding monitor.

### DETAILED DESCRIPTION OF THE PREFERRED EMBODIMENT

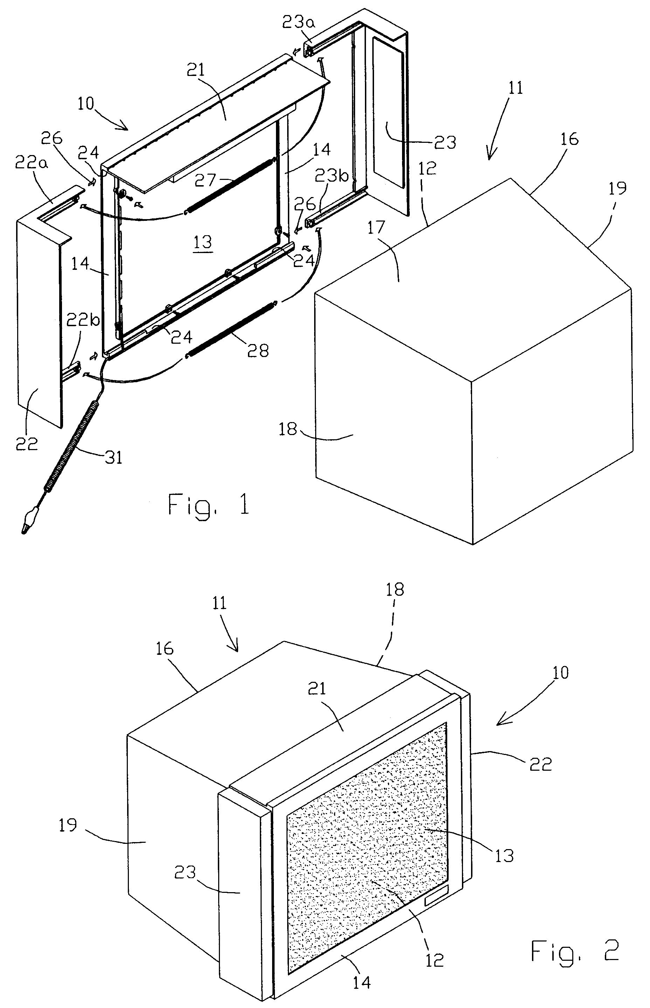

With reference to Fig. 1, a protective screen according to this utility model is indicated 10 and is suitable for being fitted on a monitor 11 in front of the display screen 12 thereof. The screen 10 comprises a frame 14 on which a filter 13 is fitted. The filter 13 is made from a material that filters light to enable best possible observation of the information displayed on the display 12. In turn the monitor 11 comprises, in addition to the display 12, a substantially parallelepiped shape casing 16 having one upper surface 17 and two opposite facing side panels 18 and 19.

The filter 13 is rectangular shape and of dimensions suitable to permit observation of the entire area of the display 12, when the filter 13 is placed in front thereof. The frame 14 is attached to the filter 13 along the edges of the latter and is also substantially rectangular in shape. The frame 14 may be provided with a flap 21, resting on the upper surface 17 of the monitor 11 when the screen 10 is fitted on the monitor, as described later.

Furthermore the screen 10 comprises two jaws 22 and 23, arranged on opposite sides of the frame 14 and suitable for sliding on the latter. The jaws 22 and 23 have accordingly each been provided with two slides, 22a, 22b and 23a, 23b respectively, to slide in corresponding ways 24 made along an upper and a lower edge of the frame 14. The slides 22a, 22b and 23a, 23b are shaped as protruding profiled elements, with a section that is complementary to that of the ways 24. Fig. 1 is an exploded configuration view, with respect to the frame 14 demonstrating how the jaws 22 and 23 are fitted on the latter, with insertion of the respective slides in the ways 24 in the direction of the arrows 26.

The jaws 22 and 23 are formed by panels without any opening and, once fastened on the monitor 11, close the lateral openings between the screen and the monitor through which light could pass to illuminate the display, creating disturbing reflections. In the jaws 22 and 23, the panels are arranged perpendicular to the profiled elements comprising the slides.

The jaws 22 and 23 are linked together by elastic means, by two compression springs 27 and 28 for example, the ends whereof are attached respectively to the slides 22a and 23a and to the slides 22b and 23b. In Fig. 1, an exploded configuration view showing how the springs 27 and 28 are fastened to the slides, it is apparent that when the springs 27 and 28 are fitted, they are disposed in line with the corresponding slides and with the ways 24.

Accordingly the springs 27 and 28 produce a system of forces that acts symmetrically on the jaws 22 and 23 and which has no imbalance effect on the respective slides, such as that of inclining them with respect to the ways 24, but tends rather to always maintain them aligned with the ways 24, thereby keeping the jaws from jamming while they slide on the frame 14. The jaws 22 and 23 are thus free to slide in the ways 24, either moving away from each other in contrast with the action exerted by the springs 27 and 28 or drawing closer to each other, as urged by the latter-named.

Further, known stopping means, not illustrated in the drawings, may be provided with the function of stopping the sliding movement of the jaws 22 and 23 towards the outside of the frame 14, whenever they reach a given position outside the frame 14. Main object of these stopping means is that of preventing the jaws 22 and 23 from exiting from the respective ways 24 and becoming detached from the frame 10 when the screen 10 is manipulated.

The protective screen 10 described up to this point is fitted in the following way. The jaws 22 and 23 are opened in opposition to the action of the springs 27 and 28 and the screen is placed adjacent to the monitor so that the filter 13 is exactly in front of the display 12, the flap is resting on the upper surface 17 and the jaws 22 and 23 are facing the side panels 18 and 19. The jaws 22 and 23 are then released and, urged by the action of the springs 27 and 28, consequently close on the corresponding side panels 18 and 19, and press on the latter in order to attach the screen stably to the casing 16.

It is obvious from the foregoing that the jaws 22 and 23 of a protective screen 10 are adequate for adaptation to casings of the monitor 11 that have widths, namely the distances between the side panels 18 and 19, that vary within a fairly wide range.

In order to create an earth path for the filter 13 after the screen 10 is fitted, the latter is provided with a conductive cord 31 attached at one end to the filter 13 and provided with a clip at the other end for connection to an earthed part external to the screen 10.

It is understood that changes and/or improvements may be made to the present utility model, without exiting from the scope of this invention.

## Claims

1. An adjustable protective screen for monitors of various dimensions and having a casing provided with two side panels, said screen comprising a frame on which a filter is fitted and attaching means for attaching said frame to said casing, characterized by the fact that said attaching means comprise two jaws, at least one of which is suitable for sliding with respect to said frame in order to lock, together with the other jaw, on said two side panels of said casing.

2. A protective screen according to claim 1, characterized by the fact that said at least one jaw is provided at its two ends with two slides for sliding in respective ways made along an upper edge and a lower edge of said frame.

3. A protective screen according to claim 2, characterized by the fact that said at least one jaw has a flat, panel-shaped portion for locking on the corresponding side panel of the monitor casing and two profiled elements protruding from said panel and which constitute the two slides.

4. A protective screen according to claim 2, characterized by elastic means for pressing said jaws against said side panels.

5. A protective screen according to claim 4, characterized by the fact that said elastic means are connected to said slides and exert a force on the latter directed along said ways.

6. A protective screen according to claim 4 or claim 5, characterized by the fact that said elastic means are comprised by a helical spring.

7. A protective screen according to claim 1, characterized by the fact that both said jaws are suitable for sliding with respect to said frame.

8. An adjustable protective screen for various monitors substantially as described with reference to the accompanying drawings.
